**Europäisches Patentamt**

**European Patent Office**

**Office européen des brevets**

(11) Veröffentlichungsnummer: **0 154 101
B1**

(12) **EUROPÄISCHE PATENTSCHRIFT**

(45) Veröffentlichungstag der Patentschrift:
**17.02.88**

(21) Anmeldenummer: **84810097.0**

(22) Anmeldetag: **27.02.84**

(51) Int. Cl.⁴: **B 60 D 1/20**

(54) **Abschleppvorrichtung.**

(43) Veröffentlichungstag der Anmeldung:
**11.09.85 Patentblatt 85/37**

(45) Bekanntmachung des Hinweises auf die Patenterteilung:
**17.02.88 Patentblatt 88/7**

(84) Benannte Vertragsstaaten:
**AT CH DE FR GB LI SE**

(56) Entgegenhaltungen:
**CH - A - 584 613
DE - A - 2 360 489
DE - A - 2 450 779
DE - A - 2 515 677
DE - A - 2 638 127
DE - A - 2 747 289
US - A - 1 355 640
US - A - 1 641 038
US - A - 1 874 424
US - A - 2 011 208
US - A - 2 174 468
US - A - 2 179 070
US - A - 3 199 894
US - A - 3 829 131**

(73) Patentinhaber: **Balogh, Jòzsef, Diebold
Schillingstrasse 24, CH-6004 Luzern (Kanton Luzern)
(CH)**

(72) Erfinder: **Balogh, Jòzsef, Dieboid Schillingstrasse 24,
CH-6004 Luzern (Kanton Luzern) (CH)**

## Beschreibung

Die Erfindung geht aus von einer Vorrichtung zum Abschleppen eines defekt geratenen oder beschädigten Kraftfahrzeuges durch ein anderes Fahrzeug.

Es ist üblich, ein defektes Fahrzeug zum Beispiel mittels eines Abschleppseiles oder eines Abschleppgurtes abzuschleppen. Das abzuschleppende Fahrzeug muss von einem Fahrer gelenkt und auch gebremst werden, um die Gefahr einer Auffahrkollision mit dem Schleppauto zu vermeiden. Durch das Abschleppseil bzw. den Abschleppgurt wird auf das abzuschleppende Fahrzeug eine ruckartig wirkende Anzugskraft ausgeübt. Es besteht immer die Gefahr, dass insbesondere das Seil reisst und das abzuschleppende Fahrzeug auf das Schleppfahrzeug auffährt. In jedem Fall benötigt ein solches Verkehrsmanöver von beiden Fahrern gute Nerven und eine grosse Konzentration.

Diese Nachteile sollten durch Abschleppstangen beseitigt werden. Eine teleskopartige Autoabschleppstange ist in der DE-A-27 47 289 beschrieben. Eine solche Teleskopstange kann bei Bedarf ausgezogen und am abzuschleppenden Fahrzeug mittels eines Hakens angekuppelt werden. Eine solche Stange soll im ausgezogenen Zustand die Länge eines normalen Abschleppseiles haben. Die Abschleppstange ist mittels einer an ihrem einen Ende angebrachten Halterung am Schleppauto anbringbar und mittels eines Hakens, der am anderen Ende der Abschleppstange vorgesehen ist, in eine Öse am abzuschleppenden Auto einhängbar.

Durch die Verwendung einer solchen Abschleppstange wird aber die ruckartig wirkende Anzugskraft auf das Schleppauto nicht eliminiert. Die teleskopartig ineinander verschiebbaren Teile sind störungsanfällig.

Aus der CH-A-584 613 ist weiter eine Abschleppstange bekannt ist, die aus zwei etwa gleich langen Rohrstücken besteht, wobei am inneren Ende des einen Rohrstückes ein Aussengewinde und am inneren Ende des andern Rohrstückes eine Überwurfmutter vorgesehen ist, so dass die beiden Rohrstücke zu einer Stange zusammengeschraubt werden können. An den äusseren Enden der Rohrstücke ist jeweils ein Puffer und ein Haken vorgesehen. Der Haken ist mit einer Mutter versehen, die am Aussengewinde jedes Rohres verschraubbar ist. Die Haken werden in die beiden Abschleppösen der Fahrzeuge eingehakt, und durch Drehen der Abschleppstange werden die Abschleppösen jeweils zwischen dem Haken und dem zugeordneten Puffer festgeklemmt. Somit wird ein ruckfreies Abschleppen ermöglicht.

Diese Abschleppstange ist technisch ziemlich kompliziert, wodurch auch die Handhabung schwierig und zeitraubend ist.

In der DE-A-24 50 779 wird ferner eine Abschleppvorrichtung beschrieben, deren zwei Teilstücke gelenkig miteinander verbunden sind, wobei das Gelenk durch eine Sperrvorrichtung blockierbar ist. Das Gelenk besteht aus einem Zwischenstück aus einer Lasche, die an ihren Enden gelenkig mit den beiden Teilstücken verbunden ist. Dadurch sind aber die beiden Teilstücke in der zusammengelegten Stellung nicht eindeutig aneinander festgelegt, so dass sie in dieser Stellung unbequem zu handhaben sind und beim Mitführen im Fahrzeug auch zu unangenehmer Geräuschbildung neigen. Ausserdem ist die Herstellung dieser Vorrichtung durch eine unter Federdruck über die beiden Gelenkstellen schiebbare rohrförmige Manschette zur Blockierung des Gelenkes ausgesprochen aufwendig.

Der im Patentanspruch 1 angegebenen Erfindung lag die Aufgabe zugrunde, eine Vorrichtung zum Abschleppen eines defekt geratenen oder beschädigten Kraftfahrzeuges durch ein anderes Fahrzeug zu schaffen, die technisch einfach ist und deren Handhabung leicht und schnell vor sich geht. Die Herstellungskosten sollen auch niedrig gehalten werden.

Die Aufgabe wird bei einer Vorrichtung nach dem Oberbegriff des Patentanspruchs 1 dadurch gelöst, dass das Gelenk aus je einer durch Umbiegen gebildeten kreisförmigen Öse am einen Ende einer jeden Einzelstange besteht, welche Einzelstangen auf ihren andern Ende in jeweils einen Bund übergehen, an welchem eine um die Längsachse der Einzelstange drehbar aufgesetzte Gabel mit Verschlussschraube vorgesehen ist, dass die Sperrvorrichtung aus einem die Gelenkstelle der beiden mit Spiel verbundenen Ösen zu überbrückenden U-förmigen Versteifungsbügel besteht, dessen mindestens ein Schenkel an einer der Einzelstangen abnehmbar befestigbar, und dessen anderer Schenkel auf der andern Einzelstange zwecks Gegeneinanderklappens der Einzelstangen frei verschiebbar gehalten ist.

Es ist von Vorteil, wenn auf jedem Schenkel des Versteifungsbügels eine Bride mit zwei zueinander parallel verlaufenden Wänden mit einem Paar von achsgleichen Löchern aufgeschweisst ist, wobei die eine Bride auf der einen Einzelstange permanent aufgesetzt und mittels einer die Löcher durchsetzenden Niete auf der einen Einzelstange frei verschiebbar gehalten ist, wogegen die andere Bride auf der anderen Einzelstange abnehmbar aufsetzbar und mittels einer Flügelmutter, die auf einer die Löcher durchsetzenden Schraube verschraubbar ist, ortsfest befestigbar ist.

Der Erfindungsgegenstand wird nachstehend anhand der Zeichnung beispielsweise näher erläutert.

Es zeigen

Fig. 1 eine Seitenansicht der Vorrichtung mit zwei miteinander verbundenen Einzelstangen und einem an denselben befestigten Versteifungsbügel sowie zwei Hängeösen.

Fig. 2 einen Schnitt entlang der Linie II-II der Fig. 1,

Fig. 3 einen Schnitt entlang der Linie III-III der Fig. 1 und

Fig. 4 eine Draufsicht auf die Gabel mit Verschlussschraube.

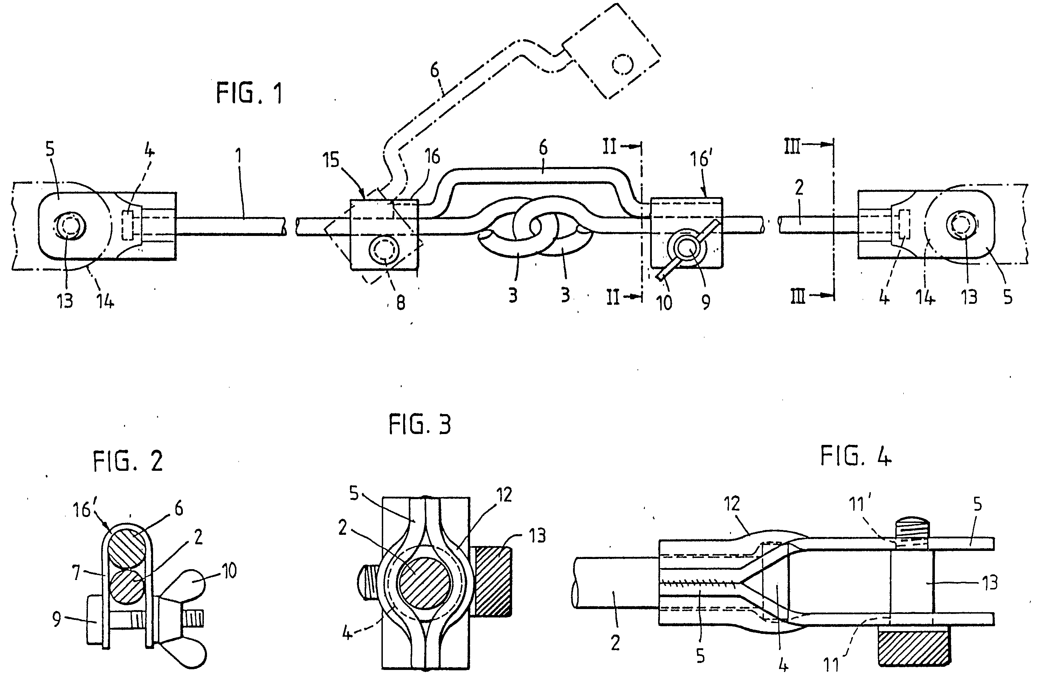

Zum Abschleppen eines defekt geratenen oder beschädigten Kraftfahrzeuges durch ein anderes Fahrzeug wird eine in der Fig. 1 dargestellte Vorrichtung verwendet. Eine solche Abschleppvorrichtung kann von jedem Verkehrsteilnehmer verwendet werden, ohne dass er unter den Fahrzeugen zu liegen und schmutzig oder nass zu werden braucht.

Die Vorrichtung besteht aus zwei geradlinig verlaufenden Einzelstangen 1, 2, die die gleiche Länge haben, und einem U-förmigen Versteifungsbügel 6. Die Länge jeder Einzelstange 1, 2 übersteigt in der Regel nicht einen Meter. Es können auch mehrere als zwei Einzelstangen 1, 2 Verwendung finden. Die Einzelstangen 1, 2 weisen auf ihren einen Enden kreisförmige Ösen 3 auf. Mittels dieser Ösen 3 sind sie einerseits miteinander mit Spiel verbunden. Auf ihren anderen Enden gehen die Einzelstangen 1, 2 in jeweils einem Bund 4 über, auf welchem eine Gabel 5 drehbar aufgesetzt ist. Die Gabeln 5 werden ihrerseits auf die Haken 14 bzw. Ösen des Schleppfahrzeuges und des abzuschleppenden Fahrzeuges gelegt. Dabei kommt der Haken 14 bzw. die Öse zwischen die beiden zueinander parallel verlaufenden Schenkelabschnitte der Gabel 5, wonach eine Verschlussschraube 13 durch die gleichachsigen Löcher 11, 11' der Schenkelabschnitte durchgeführt wird.

Die beiden zusammenlaufenden Schenkelabschnitte jeder Gabel 5 sind zusammengeschweisst und bilden eine Ausbauchung 12. Jede Ausbauchung dient zur Lagerung des Bundes 4 der Einzelstange 1, 2. In der Ausbauchung 12 ist der Bund 4 frei gelagert, so dass die Gabel 5 um die Längsachse der Einzelstange 1, 2 drehbar, jedoch nicht in der Längsachse der Einzelstange 1, 2 verschiebbar ist. Die Löcher 11, 11' in den zueinander parallel verlaufenden Längsabschnitten jeder Gabel 5 sind eines ungleichen Durchmessers. Das Loch des kleineren Durchmessers ist ein Gewindeloch 11', in welches der mit Aussengewinde versehene Abschnitt der Verschlussschraube 13 einschraubbar ist. Durch die eingeschraubte Verschlussschraube 13 wird der Haken 14 bzw. die Öse des Schleppfahrzeuges und des abzuschleppenden Fahrzeuges zwischen den zueinander parallel verlaufenden Schenkelabschnitten der Gabel 5 gesichert.

Der U-förmige Versteifungsbügel 6 ist zur Überbrückung der Verbindungsstelle der beiden Einzelstangen 1, 2 bestimmt. Auf jedem Schenkel des Versteifungsbügels 6 ist eine Bride 16, 16' mit zwei zueinander parallel verlaufenden Wänden 7 mit einem Paar von achsgleichen Löchern aufgeschweisst. Die in der linken Hälfte der Fig. 1 dargestellte Bride 16 ist auf der Einzelstange 1 permanent aufgesetzt; sie ist auf der Einzelstange 1 mittels einer die Löcher durchsetzenden Niete 8 frei verschiebbar gehalten. Die in der rechten Hälfte der Fig. 1 dargestellte Bride 16' ist auf der Einzelstange 2 abnehmbar aufsetzbar. Sie ist mittels einer Flügelmutter 10, die auf einer die Löcher durchsetzenden Schraube 9 verschraubbar ist, auf der Einzelstange 2 ortsfest befestigbar. Wenn die Flügelmutter 10 von der Schraube 9 abgeschraubt wird und die Schraube 9 aus den Löchern herausgenommen wird, kann der Versteifungsbügel 6 in die strichpunktierte Stellung gebracht werden. Dies wird ermöglicht durch eine Aussparung 15 in der Bride 16 und dadurch, dass der Schenkel des Versteifungsbügels 6 hier kürzer ausgeführt ist. Der Versteifungsbügel 6 kann dann mit der auf der Einzelstange 1 aufgesetzten Bride 16 auf dieser Einzelstange 1 weiter nach links – in der Fig. 1 gesehen – verschoben werden und die Einzelstangen 1, 2 dicht aneinander gebracht werden. Die so zusammengeklappten Einzelstangen 1, 2 können dann in eine nicht dargestellte Tüte untergebracht und bequem im Kofferraum eines Kraftfahrzeuges versorgt werden.

Die Einzelstangen 1, 2 bestehen aus rostfreiem vollem Metall eines Durchmessers von 10 mm. Der Versteifungsbügel 6 mit den Briden 16, 16' und die Gabeln 5 bestehen ebenfalls aus rostfreiem Metall.

Die oben beschriebene Vorrichtung hat ein verhältnismässig kleines Gewicht und ist leicht und schnell manipulierbar. Die dicht aneinander zusammengeklappten Einzelstangen sind im Kofferraum eines Kraftfahrzeuges als Zubehör unterbringbar. Die Vorrichtung stellt ein zuverlässiges Abschleppmittel für Kraftfahrzeuge dar, die beim Abschleppen keine ruckartige Wirkung auf das abzuschleppende Kraftfahrzeug ausübt. Durch die einfache technische Form (keine Haken oder teleskopischen Teile) werden die Herstellungskosten niedrig gehalten.

**Patentansprüche**

1. Vorrichtung zum Abschleppen eines defekt geratenen oder beschädigten Kraftfahrzeuges durch ein anderes Fahrzeug, mit mindestens zwei geradlinig verlaufenden Einzelstangen (1, 2) die gelenkig miteinander verbunden sind, wobei das Gelenk durch eine Sperrvorrichtung blockierbar ist, dadurch gekennzeichnet, dass das Gelenk aus je einer durch Umbiegen gebildeten kreisförmigen Öse (3) an einem Ende einer jeden Einzelstange (1, 2) besteht, welche Einzelstangen auf ihren andern Enden in jeweils einem Bund (4) übergehen, an welchem eine um die Längsachse der Einzelstange drehbar aufgesetzte Gabel (5) mit Verschlussschraube (13) vorgesehen ist, und dass die Sperrvorrichtung aus einem die Gelenkstelle der beiden mit Spiel verbundenen Ösen (3) zu überbrückenden U-förmigen Versteifungsbügel (6) besteht, dessen mindestens ein Schenkel an einer der Einzelstangen (1, 2) abnehmbar befestigbar und dessen anderer Schenkel auf der andern Einzelstange zwecks Gegeneinanderklappens der Einzelstangen (1, 2) frei verschiebbar gehalten ist.

2. Vorrichtung nach Patentanspruch 1, dadurch gekennzeichnet, dass auf jedem Schenkel des Versteifungsbügels (6) eine Bride (16) mit zwei zueinander parallel verlaufenden Wänden (7) mit einem Paar von achsgleichen Löchern aufgeschweisst ist, wobei die eine Bride (16) auf der einen Einzelstange (1) permanent aufgesetzt und mittels einer die Löcher durchsetzenden Niete (8) auf der einen Einzelstange (1) frei verschiebbar gehalten ist, wogegen die andere Bride (16) auf der andern Einzelstange (2) abnehmbar aufsetzbar und mittels einer Flügelmutter (10), die auf einer die Löcher durchsetzenden Schraube (9) verschraubbar ist, ortsfest befestigt ist.

3. Vorrichtung nach Patentanspruch 1, dadurch gekennzeichnet, dass die Einzelstangen (1, 2) aus rostfreiem Metall und eines Durchmessers von 10 mm sind.

4. Vorrichtung nach Patentanspruch 1, dadurch gekennzeichnet, dass die beiden zusammenlaufenden Schenkelabschnitte jeder Gabel (5) zusammengeschweisst sind und eine Ausbauchung (12) zur Lagerung des Bundes (4) bilden und die beiden zueinander parallel verlaufenden Schenkelabschnitte ein Paar von achsgleichen Löchern (11, 11') aufweisen, die durch die Verschlussschraube (13) durchsetzbar sind.

5. Vorrichtung nach Patentanspruch 4, dadurch gekennzeichnet, dass die Löcher (11, 11') eines ungleichen Durchmessers sind, wobei dasjenige des kleineren Durchmessers ein Gewindeloch (11') ist, in welches der mit Aussengewinde versehene Abschnitt der Verschlussschraube (13) einschraubbar ist.

## Claims

1. A device for towing a defect or damaged car by another motor car, with at least two rectilinear shaped individual rods (1, 2), joined together articulatedly, whereby the joint is blockable by a locking device, is characterized thereby that the joint is formed by an eye (3), bent round to make a circular form and attached, in each case, to one end of each rod (1, 2); the individual rods teminating, in each case, at the other end in a flange (4) which is provided with a pivotal bracket (5) complete with locking device (13) on the longitudinal axis of each; and the locking device of a U-shaped bracing stirrup (6) which bridges over the two linking eyes (3) which have free play; at least one arm of the stirrup on one of the two rods (1, 2) is removable, its other arm on the second rod is mounted free-riding for the purpose of folding the rods together.

2. A device according to Patent Claim 1 thereby characterized that on each arm of the bracing stirrup (6) is welded, it having two walls (7) running parallel to each other, with a pair of holes on the same axis, whareby the one bride (16) is permanently mounted on one of the rods (1) and is free-riding on the one rod (1) by means of a rivet (8) put trough the holes, where as the other bride (16') on the second rod (2) is removable and fixable and can be firmly secured by means of a wing-nut (10) to be screwed on to the rivet (9).

3. A device according to Patent Claim 1 thereby characterized that the individual rods (1, 2) are of rustproof metal and have a diameter of 10 mm.

4. A device according to Patent Claim 1, thereby characterized that both parallel arm sections of each bracket (5) are welded together and form a protuberance (12) which acts as bearing of the flange (4) and that the parallel arm sections are provided with a pair of holes (11, 11') of the same axis, penetrable by the locking screw (13).

5. A device according to Patent claim 1, thereby characterized that the holes (11, 11') are of unequal length, whereby the one with the smaller diameter is a threaded hole, in which the section of the locking screw (13) furnished with an external thread can be screwed.

## Revendications

1. Dispositif de remorquage d'un véhicule à moteur en panne ou endommagé par un autre véhicule, avec au moins deux barres individuelles (1, 2) rectilignes reliées entre elles par une articulation, cette articulation étant verrouillable par un dispositif de blocage, caractérisé par le fait que l'articulation consiste en deux boucles circulaires (3) formées par recourbement, une à l'une des extrémités de chaque barre individuelle (1, 2), lesquelles barres individuelles comportent chacune à leur autre extrémité un collet (4) sur lequel est rapportée une fourche (5) avec boulon de fermeture (13), fourche montée pivotante autour le l'axe lingitudinal de la barre individuelle, et caractérisé par le fait que le dispositif de blocage de l'articulation consiste en un étrier de raidissement (6) en forme de U pontant l'articulation des deux boucles (3) accouplées avec jeu, étrier de raidissement dont au moins une branche peut se fixer de façon amovible à l'une des barres individuelles (1, 2) et dont l'autre barre individuelle pour l'accouplement des barres individuelles (1, 2).

2. Dispositif selon revendication de brevet 1, caractérisé par le fait qu'une bride (16) à deux ailes (7) parallèles percées d'une paire de trous de même axe est soudée sur chacune des branches de l'étrier de raidissement (6), l'une de ces brides (16) étant montée à demeure sur l'une des barres individuelles (1) et tenue librement coulissante sur cette barre individuelle (1) au moyen d'un rivet (8) passant par les trous, alors que l'autre bride (16) est rabattable de façon amovible sur l'autre barre individuelle (2) et y est fixée en place au moyen d'un écrou à oreilles (10) qui se visse sur le boulon (9) passant par les trous.

3. Dispositif selon revendication de brevet 1, caractérisé par le fait que les barres individuelles (1, 2) sont en métal inoxydable et ont un diamètre de 10 mm.

4. Dispositif selon revendication de brevet 1, caractérisé par le fait que les deux segments de joue convergents de chaque fourche (5) sont soudés l'un à l'autre et forment un renflement (12) pour le logement du collet (4) et que les deux segments de joue parallèles sont percés d'une paire de trous (11, 11') de même axe permettant le passage du boulon de fermeture (13).

5. Dispositif selon revendication de brevet 4, caractérisé par le fait que les trous (11, 11') sont de diamètres différents, celui du plus petit diamètre étant un trou taraudé (11') dans lequel la portée filetée du boulon de fermeture (13) vient se visser.

FIG. 1

FIG. 2

FIG. 3

FIG. 4